# EUROPÄISCHE PATENTSCHRIFT

(11) **EP 0 421 190 B1**
(45) Veröffentlichungstag und Bekanntmachung des Hinweises auf die Patenterteilung: **22.06.1994**
(21) Anmeldenummer: 90118009.1
(22) Anmeldetag: 19.09.1990
(51) Int. Cl.: G02F 1/1337

(54) **Verfahren zum Herstellen einer Flüssigkristallzelle**
Method of manufacturing a liquid crystal cell
Procédé de fabrication d'une cellule à cristal liquide

(30) Priorität: 06.10.1989 DE 3933422
(43) Veröffentlichungstag der Anmeldung: 10.04.1991
(73) Patentinhaber: Nokia (Deutschland) GmbH, 75175 Pforzheim (DE)
(72) Erfinder: Brosig, Stefan, Dr., D-7000 Stuttgart (DE); Wirsig, Hansjörg, D-7014 Kornwestheim (DE)

(56) Entgegenhaltungen:
- MOLECULAR CRYSTALS AND LIQUID CRYSTALS. Bnd. 132, Nr. 1/2, 1986, NEW YORK, US Seiten 167 - 180; M.E.BECKER ET AL.: 'Alignment Properties of Rubbed Polymer Surfaces'
- PATENT ABSTRACTS OF JAPAN Bnd. 13, Nr. 261 (P-885)(3609) 16. Juni 1989 & JP-A-1 055 527
- PROCEEDINGS OF THE SID. Bnd. 28, Nr. 2, 1987, LOS ANGELES US Seiten 155 - 158; K. YOSHIDA ET AL.: 'Generation of a high pretilt angle by rubbing: Application to supertwisted nematic LCD's'

## Beschreibung

Die Erfindung betrifft ein Verfahren zum Herstellen einer Flüssigkristallzelle, genauer gesagt ein Verfahren zum Bearbeiten einer organischen Orientierungsschicht auf einer Substratplatte für eine Flüssigkristallzelle. Derartige Orientierungsschichten dienen zum Erzeugen einer Orientierung und eines Pretilt der Flüssigkristallmoleküle. Unter Orientierung ist hierbei der Winkel zwischen dem Rand einer Substratplatte und der Projektion eines Flüssigkristallmoleküls auf diese Substratplatte zu verstehen. Der Pretilt ist der Winkel, um den ein Flüssigkristallmolekül gegenüber der Ebene der Substratplatte geneigt ist.

### STAND DER TECHNIK

Orientierungsschichten der genannten Art werden mit zwei unterschiedlichen Materialgruppen nach zwei unterschiedlichen Verfahren hergestellt. Das eine Verfahren nutzt anorganische Materialien, die im Vakuum schräg auf die Substratplatte in der Orientierungsrichtung aufgedampft werden. Das zweite Verfahren nutzt organische Substanzen, die z. B. durch Aufsprühen, Tauchen oder, in der Regel, durch Spincoaten aufgebracht werden. Die polymeren Filme werden einem Temperungsprozeß unterzogen und anschließend mit einem weichen Material gerieben, in aller Regel mit Samt, der auf einer Walze befestigt ist. Dieses Reiben erfolgt in der gewünschten Orientierungsrichtung.

Aus dem Aufsatz von Becker, Kilian, Kosmowski und Mlynski, Molecular Crystals and Liquid Crystals, 1986, Seite 167 ff, ist es bekannt, nicht nur in eine Richtung, sondern auch in Gegenrichtung zu reiben. Wie jedoch die Autoren auf Seite 174 f ausführen, bewirkt das Reiben in Gegenrichtung eine Verminderung der Pretilt-Werte, die sich nach dem Reiben in eine Richtung eingestellt hatten.

Aus DE 27 22 389 A1 ist es bekannt, beide Verfahren zur Orientierungs- und Pretilt-Einstellung gemeinsam anzuwenden, also sowohl das Schrägaufdampfen wie auch das Reiben. Das Reiben wird in einer vorgegebenen Richtung mehrfach ausgeführt. Die vorgegebene Richtung steht dann, wenn ein steiler Aufdampfwinkel verwendet wurde, rechtwinklig zur Projektion der Aufdampfrichtung auf die Substratplatte. Bei flachen Aufdampfwinkeln wird parallel zur Projektion der Aufdampfrichtung auf die Substratplatte gerieben, und zwar von der Seite her, auf der aufgrund der Schrägaufdampfung die Flüssigkristallmoleküle bei der fertigen Flüssigkristallzelle tiefer liegen, also sozusagen in Richtung aufsteigenden Pretilts. Dieses Verfahren erlaubt es, den Pretilt, der auch bei flachem Schrägaufdampfen relativ steil ist, auf kleinere Werte einzustellen.

Während beim Verwenden schräg aufgedampfter anorganischer Orientierungsschichten bei den fertigen Flüssigkristallzellen eher Probleme wegen zu hoher Pretiltwinkel bestehen, ist es beim Verwenden polymerer geriebener Orientierungsschichten eher umgekehrt. Man hat sich hier bemüht, durch Materialfortentwicklung höhere Pretiltwinkel zu erzielen. Man hat auch versucht, die Materialien nicht zu reiben, sondern stattdessen eine Orientierung der polymeren Orientierungsschichtmoleküle durch Aufgießen derselben in der Orientierungsrichtung oder durch andere Fließ-Auftrageverfahren zu bewirken. Es schien erstrebenswert, das Reiben zu vermeiden, da es ja bekannt war, daß Reiben ursprünglich erzielbare hohe Pretiltwinkel erniedrigt (siehe hierzu die Lehre der oben zitierten DE 27 22 389 A1).

Alle bisherigen Versuche der Entwicklung besserer Materialien für Orientierungsschichten und der verbesserten Herstellung solcher Schichten haben noch nicht zu voll befriedigenden Ergebnissen geführt, d. h. zu polymeren Orientierungsschichten, mit denen sehr hohe Pretiltwinkel auf einfache und zuverlässige Art und Weise erzielbar sind.

### DARSTELLUNG DER ERFINDUNG

Das erfindungsgemäße Verfahren zum Bearbeiten einer polymeren Orientierungsschicht zeichnet sich dadurch aus, daß zunächst nach der herkömmlichen Reibemethode in einer Richtung einfach oder mehrfach gerieben wird. Dann wird jedoch in der Gegenrichtung gerieben, aber mit schwächerem Auflagedruck. Auch dieses Reiben in Gegenrichtung kann mehrfach wiederholt werden.

Es hat sich herausgestellt, daß sich mit diesem Verfahren die Pretiltwinkel aller organischen Orientierungsschichten um einige Grad erhöhen lassen, unabhängig vom verwendeten Material. Die Pretilterhöhung um einige Grad wird also sowohl bei herkömmlichen Polyimid-Orientierungsschichten erzielt, die herkömmlich einen Pretilt von nur einigen wenigen Grad aufweisen, wie auch bei neuer entwickelten Materialien, z. B. Polyphenylen oder neueren Polyimiden, mit denen nach den herkömmlichen Herstellverfahren Pretiltwinkel von etwa 15 - 20° erreicht werden.

### WEGE ZUM AUSFÜHREN DER ERFINDUNG

Versuche wurden sowohl mit herkömmlichen Polyimid- wie auch mit bekannten Polyphenylen-Schichten ausgeführt. Das verwendete Polyimid wurde von der Firma Merck, Bundesrepublik Deutschland, das verwendete Polyphenylen von der Firma ICI, Großbritannien, bezogen. Diese Materialien wurden nach einem üblichen Spincoatverfahren auf Substratplatten aus Glas aufgetragen und in üblicher Weise getempert. Auch das anschließende Reiben in einer vorgegebenen Orientierungsrichtung erfolgte auf herkömmliche Art und Weise, also mit üblicher Reibgeschwindigkeit und üblicher Reibandruckkraft. Verwendet wurde eine Samtwalze mit einer Länge der Samthaare von etwa 2 mm. Es wird darauf hingewiesen, daß bis zu diesem Stand der Herstellung kein Unterschied zu den üblichen bekannten Verfahren besteht.

Anschließend wurden die Schichten jedoch in Gegenrichtung gerieben, und zwar mit derselben Samtwalze und derselben Reibgeschwindigkeit, jedoch mit geringerer Anpreßdruck. Die Walze wurde nur so weit an die Orientierungsschicht angenähert, daß die Samthaare gerade auf der Schicht aufsetzten. Beim Reiben in der ursprünglichen Richtung war der Abstand zwischen Orientierungsschicht und Walze dagegen etwa 1/4 - 1/2 mm geringer, so daß die etwa 2 mm langen Samthaare erheblich umgebogen wurden.

Es hat sich herausgestellt, daß es von Vorteil ist, mehrfach schwach zu reiben. Wahrscheinlich ergeben sich beim schwachen Anpreßdruck statistisch gesehen relativ große Bearbeitungsunterschiede in unterschiedlichen Flächenbereichen, welche Unterschiede durch mehrfaches Reiben ausgeglichen werden.

Eine sichere Erklärung für den beobachteten Effekt besteht nicht, so wie auch keine gesicherte Erklärung für die Effekte der Pretilt- und Orientierungs-Erzeugung besteht. Beobachtungen von schräg aufgedampften anorganischen Schichten her legen es nahe, daß der Pretilt nicht nur durch chemisch-physikalische Eigenschaften, sondern auch durch mechanische Eigenschaften der Schicht bedingt ist, nämlich durch eine wellige Struktur. Wird eine solche wellige Struktur beim üblichen relativ starken Reiben einer polymeren Orientierungsschicht ebenfalls erzeugt, so kann man sich vorstellen, daß das schwache Reiben in Gegenrichtung dazu führt, daß die Wellenberge etwas zurückgeschoben werden und sich dabei erhöhen. Dies würde es plausibel machen, daß das schwache Reiben in Gegenrichtung zu einem Erhöhen des Pretilt führt.

So wie herkömmlicherweise für jedes verwendete Orientierungsschichtmaterial und jeden konkreten Herstellablauf der optimale Reibungsdruck, die optimale Reibungsgeschwindigkeit und das optimale Reibungsmaterial gefunden werden müssen, so ist es auch beim beschriebenen Verfahren erforderlich, im jeweils einzelnen Fall durch Versuche herauszufinden, wie die Verfahrensgrößen für das Reiben in Gegenrichtung beschaffen sein müssen, damit sich ein optimales Erhöhen des Pretilt ergibt. Es hat sich aber herausgestellt, daß hier das Optimieren erheblich einfacher ist als dies für das Optimieren des herkömmlichen Reibens gilt, da sich ja der Optimierungsvorgang für das Reiben in Gegenrichtung an den herkömmlichen Optimierungsvorgang für das übliche Reiben anschließt, so daß das Reibematerial, im Regelfall eine Samtwalze, und die Reibegeschwindigkeit bereits im wesentlichen festliegen, und nur noch der Reibdruck optimiert werden muß.

Bei den beschriebenen Versuchen standen keine Einrichtungen zum exakten Messen des Pretilt zur Verfügung. Die Erhöhung des Pretilt war jedoch bei verdrehtnematischen Flüssigkristallzellen leicht zwischen gekreuzten Polarisatoren durch geringere Helligkeit der behandelten Zellen im Vergleich zu unbehandelten Zellen erkennbar. Je höher der Pretilt ist, desto stärker ist die Komponente von polarisiertem Licht, dessen Vektor durch die verdrehtnematische Zelle nichtverdreht wird; diese nichtverdrehte Komponente wird durch den gekreuzt stehenden zweiten Polarisator gelöscht. Der Effekt abnehmender Helligkeit war beim Verwenden von Polyimid für die orientierungsschicht in gleicher Weise zu beobachten wie beim Verwenden von Polyphenylen. Nach der herkömmlichen Herstellmethode beträgt der Pretilt beim Verwenden herkömmlichen Polyimids etwa 1 - 5°, der Pretilt beim Verwenden von Polyphenylen beträgt etwa 10 - 20°, je nach Aufwand bei der Verfahrensführung. Die durch das leichte Reiben in Gegenrichtung erzeugte Pretilterhöhung wird aufgrund der beobachteten Helligkeitsverminderung auf einige wenige Grad geschätzt, wahrscheinlich lag sie bei etwa 3 - 6°.

## Patentansprüche

1. Verfahren zum Bearbeiten einer organischen Orientierungsschicht auf einer Substratplatte für eine Flüssigkristallzelle, welche Orientierungsschicht zum Erzeugen einer Orientierung und eines Pretilts von Flüssigkristallmolekülen dient, bei welchem Verfahren die Orientierungsschicht wenigstens in einer vorgegebenen Richtung mit einer mit Samt bezogenen Walze gerieben wird, um den gewünschten Orientierungseffekt zu erzielen,
**dadurch gekennzeichnet,**
daß zur Erhöhung des Pretilts die Orientierungsschicht zunächst in einer vorgegebenen Richtung gerieben wird, wobei die mit Samt bezogene Walze so weit der Orientierungsschicht angenähert wird, daß die Samthaare umgebogen werden, und dann mit schwächerem Reibedruck in Gegenrichtung gerieben werden, indem die Walze nur so weit an die Orientierungsschicht angenähert wird, daß die Samthaare gerade auf der Schicht aufsetzen.

2. Verfahren nach Anspruch 1,
**dadurch gekennzeichnet,**
daß die Orientierungsschicht in Gegenrichtung mehrfach mit schwachem Reibedruck gerieben wird.

## Claims

1. Method of processing an organic aligning layer on a substrate plate for a liquid crystal cell, which aligning layer serves to produce an alignment and a pre-tilt of liquid-crystal molecules, in which method the aligning layer is rubbed at least in one specified direction with a velvet-clad roller in order to produce the desired alignment effect, characterized in that, to increase the pre-tilt, the aligning layer is first rubbed in a specified direction, the velvet-clad roller being brought close enough to the aligning layer for the velvet hairs to be bent, and rubbing is then carried out in the opposite direction with a lighter rubbing pressure, the roller only being brought close enough to the aligning layer for the velvet hairs just to rest on the layer.

2. Method according to Claim 1, characterized in that the aligning layer is rubbed repeatedly in the opposite direction with light rubbing pressure.

## Revendications

1. Procédé de traitement d'une couche d'orientation organique sur une plaque de substrat pour une cellule à cristal liquide, laquelle couche d'orientation sert à réaliser une orientation et une pré-inclinaison de molécules de cristal liquide, procédé dans lequel la couche d'orientation est frottée au moins dans une direction prédéfinie avec un rouleau revêtu de velours afin d'obtenir l'effet d'orientation souhaité, caractérisé par le fait que pour accroître la pré-inclinaison, la couche d'orientation est tout d'abord frottée dans une direction prédéfinie, le rouleau revêtu de velours étant approché de la couche d'orientation de telle façon que les poils du velours sont repliés, puis est frottée avec une pression de frottement plus faible dans le sens inverse, le rouleau étant alors approché de la couche d'orientation uniquement de façon à ce que les poils du velours reposent à peine sur la couche.

2. Procédé selon la revendication 1, caractérisé par le fait que la couche d'orientation est frottée plusieurs fois dans le sens inverse avec une faible pression.
